# EUROPÄISCHE PATENTSCHRIFT

(11) **EP 2 850 860 B1**
(45) Veröffentlichungstag und Bekanntmachung des Hinweises auf die Patenterteilung: **06.11.2019**
(21) Anmeldenummer: 12812909.5
(22) Anmeldetag: 13.12.2012
(51) Int. Cl.: H04W 12/06, H04L 29/06, H04L 9/32, G01D 4/00

(54) **SICHERUNG EINES ENERGIEMENGENZÄHLERS GEGEN UNBEFUGTEN ZUGRIFF**
TAMPER-PROOFING AN ENERGY METER
SYSTÈME DE SÉCURITÉ D'UN COMPTEUR D'ÉNERGIE SERVANT À LUTTER CONTRE UN ACCÈS NON AUTORISÉ

(30) Priorität: 02.05.2012 DE 102012008519
(43) Veröffentlichungstag der Anmeldung: 25.03.2015
(73) Patentinhaber: innogy SE, 45128 Essen (DE)
(72) Erfinder: GAUL, Armin, 59379 Selm (DE); CATER, Stephan, 45136 Essen (DE); HEIDER, Markus, 93133 Burglengenfeld (DE)
(74) Vertreter: Cohausz & Florack
(86) Internationale Anmeldenummer: PCT/EP2012/075323
(87) Internationale Veröffentlichungsnummer: WO 2013/164042

(56) Entgegenhaltungen:
- WO-A2-2010/035137
- WO-A2-2011/124298
- DE-A1-102009 036 181
- US-A1- 2007 254 711
- US-A1- 2008 109 537

## Beschreibung

Der Gegenstand betrifft ein Energiemengenzählersicherungssystem sowie ein Verfahren zur Sicherung eines Energiemengenzählers.

Die Verbreitung von intelligenten Energiemengenzählern, wie beispielsweise beim Smart Metering, führt zu einer erhöhten Anforderung an die Sicherung der Kommunikation dieser Energiemengenzähler mit einer zentralen Abrechnungsstelle. Energiemengenzähler werden im Bereich des Erfassens von elektrischer Energie, jedoch auch als Gas- und Strommesser eingesetzt. Dabei können mehrere Energiemengenzähler in einem lokalen Zählernetzwerk zusammengefasst sein.

Zur Vereinfachung einer Kommunikationsschnittstelle zwischen einem Energiemengenzähler und einer zentralen Abrechnungsstelle wird ein Kommunikations-Gateway (Kommunikationsgerät) vorgeschlagen. Dieses Kommunikations-Gateway dient als Kommunikationsschnittstelle zwischen dem lokalen Zählernetzwerk (LMN Local Metering Network) und dem Weitverkehrsnetz (WAN Wide Area Network), über das ein Messstellenbetreiber oder eine Abrechnungszentrale Zugriff auf den Energiemengenzähler hat.

Darüber hinaus kann das Kommunikationsgerät über eine weitere Schnittstelle mit einem Heimautomatisierungsnetz (HAN Home Automation Network) verbunden sein, in dem verschiedene lokale Steuersysteme (CLS Controllable Local Systems) angeordnet sind. Diese können beispielsweise Steuerungen von lokalen Energiegewinnungsanlagen wie beispielsweise lokalen Windkraftanlagen und lokalen Solaranlagen beinhalten. Auch können lokale Ladestationen zum Laden von elektrisch betriebenen Fahrzeugen vorgesehen sein.

Das Kommunikationsgerät stellt somit eine einheitliche Schnittstelle der lokal angeordneten Energiemengenzähler und der lokal angeordneten Heimautomatisierungsnetze an ein Weitverkehrsnetz dar, über das berechtigte Personen, insbesondere Messstellenbetreiber und Abrechnungszentralen, Zugriff auf die in den lokalen Netzen angeordneten Geräte, insbesondere die Energiemengenzähler, nehmen können.

Diese zentrale Schnittstelle stellt einen sensiblen Angriffspunkt für Angriffe Dritter dar. Aus diesem Grunde muss diese Schnittstelle besonders gesichert sein. Insbesondere muss die Schnittstelle sicherstellen, dass diese nur dann Daten der Energiemengenzähler versendet, wenn diese Daten von einer berechtigten Stelle abgerufen werden. Es muss ferner sichergestellt werden, dass das Kommunikationsgerät nicht in einer unautorisierten Umgebung betrieben wird, um beispielsweise Verschlüsselungsgeheimnisse von der zentralen Abrechnungsstelle zu erfahren.

Aus diesem Grunde hat das Bundesamt für Sicherheit in der Informationstechnik (BSI) ein Schutzprofil für Schnittstellen an Smart Metering Systemen erstellt, welches Grundlage für die Zulassung der genannten Kommunikationsgeräten, die als Schnittstelle dienen, ist. Das Schutzprofil für die Kommunikationseinheit eines intelligenten Messsystems für Stoff- und Energiemengen, Version 01.01.01 (Final Draft) wird vollständig zum Gegenstand dieser Anmeldung gemacht. Alle darin genannten Funktionalitäten des Gateways sollen gegenständlich durch das gegenständliche Kommunikationsgerät zur Verfügung gestellt werden. Ferner sollen alle darin genannten Energiemengenzähler sowie alle darin genannten Hausautomatisierungsnetze und lokalen Systeme mit einem gegenständlichen Energiemengenzählersicherungssystem betreibbar sein.

Aus der DE 10 2009 036 181 A1 ist eine Gateway-Einrichtung zur Erfassung eines Ressourcenverbrauchs bekannt, welche über ein Identifikationsmodul gegenüber unbefugten Zugriff gesichert sein kann.

Die WO 2011/124298 A2 zeigt ebenfalls eine Sicherung einer Kommunikation eines Verschlüsselungsmoduls mit einem Energiemengenzähler.

Insbesondere bei bereits installierten Energiemengenzählern sowie Kommunikations-Gateways ist die Erfüllung des Sicherheitsprofils teilweise problematisch, da das vorhandene Kommunikationsgerät nicht immer allen Sicherheitsanforderungen genügt. Insbesondere bei bereits installierten Ladestationen für elektrische Fahrzeuge, die allesamt mit intelligenten Stromzählern betrieben werden, ist die Erfüllung des Schutzprofils problematisch. Ein Nachrüsten von mehreren tausend Ladestationen führt zu enormen Kosten. Aus diesem Grunde wird nach Möglichkeiten gesucht, das Nachrüsten der Ladestationen möglichst einfach zu gestalten.

Aus diesem Grunde lag dem Gegenstand die Aufgabe zugrunde, ein Energiemengenzählersicherungssystem zur Verfügung zu stellen, welches in besonders einfacher Weise den Anforderungen an ein Schutzprofil für Energiemengenzähler genügt und gleichzeitig ein Nachrüsten ermöglicht.

Diese Aufgabe wird durch ein Energiemengenzählersicherungssystem nach Anspruch 1 sowie ein Verfahren nach Anspruch 18 gelöst.

Es ist erkannt worden, dass das Schutzprofil verlangt, dass ein Verschlüsselungsmodul vorgesehen ist, welches für die Verschlüsselung und sichere Verwahrung von kryptographischen Geheimnissen verwendet werden soll. Das Verschlüsselungsmodul soll dabei insbesondere für die Generierung von Schlüsselpaaren, für die Erzeugung von Zufallswerten, insbesondere für die Erzeugung von Zufallszahlen für kryptographische Operationen und die sichere Verwahrung von Schlüsselpaaren und Zertifikaten verschiedener Kommunikationspartner dienen. Insbesondere sollen die Schlüssel (private und öffentliche) und Zertifikate der Schnittstelle bzw. des Verschlüsselungsmoduls selbst gespeichert sein. Außerdem sollen Zertifikate des Netzstellenbetreibers oder der Abrechnungszentrale gespeichert sein. Darüber hinaus soll das Verschlüsselungsmodul geeignet sein, eine elektronische Signatur von Inhaltsdaten, insbesondere von Messdaten des Energiemengenzählers, zu erstellen. Auch soll das Verschlüsselungsmodul geeignet sein, elektronische Signaturen von Inhaltsdaten überprüfen zu können. Insbesondere soll dabei überprüft werden können, ob Inhaltsdaten tatsächlich von dem Energiemengenzähler stammen, der dies vorgibt. Dies soll über eine Signatur über die Zählerdaten durch den Energiemengenzähler selbst ermöglicht sein. Auch sollen Verschlüsselungen dieser Daten durch das Verschlüsselungsmodul bereitgestellt werden.

Das Sicherheitsprofil verlangt nun, dass ein solches Verschlüsselungsmodul nur in einer authentifizierten Umgebung betrieben werden darf. Außerdem soll das Verschlüsselungsmodul nur nach erfolgter Authentifizierung seine Funktionen zur Verfügung stellen.

Es ist erkannt worden, dass diese beiden Bedingungen nicht ausschließlich dann erfüllbar sind, wenn das Verschlüsselungsmodul fest in dem Kommunikationsgerät verankert ist, sondern auch dann, wenn das Verschlüsselungsmodul zerstörungsfrei entfernbar in dem Kommunikationsgerät angeordnet ist.

Gegenständlich ist erkannt worden, dass alle Anforderungen an das Schutzprofil dann erfüllt werden können, wenn das Verschlüsselungsmodul zunächst in einem Initialzustand betrieben wird, in dem nur ein eingeschränkter Zugriff auf Verschlüsselungsfunktionen ermöglicht ist. Vorzugsweise ist lediglich ein Zugriff auf solche Verschlüsselungsfunktionen ermöglicht, die die Authentifizierung des Verschlüsselungsmoduls gegenüber einem entfernt angeordneten Zentralrechner ermöglichen. Darüber hinaus können in dem Initialzustand Verschlüsselungsfunktionen ermöglicht sein, die die korrekte Verbindung zwischen dem Verschlüsselungsmodul und einem bestimmten Energiemengenzähler sicherstellen.

Insofern kann beispielsweise eine mögliche im Initialzustand ermöglichte Verschlüsselungsfunktion derart sein, dass ein Zufallswert erzeugt wird. Eine andere Funktion kann der Zugriff auf einen öffentlichen Schlüssel eines Zentralrechners sein, um eine Signatur des Zentralrechners über den Zufallswert zu überprüfen.

Wie Eingangs bereits erläutert, kann in dem Verschlüsselungsmodul eine Vielzahl von kryptographischen Geheimnissen hinterlegt sein. Dies können Zertifikate, öffentliche Schlüssel und private Schlüssel des Verschlüsselungsmoduls selbst sein. Hierbei sind unterschiedliche Schlüsselpaare und Zertifikate möglich, insbesondere jeweils zum Signieren von Zufallszahlen, Kodieren von Nutzerdaten, insbesondere Messwerten des Energiemengenzählers und zum Verschlüsseln von Kommunikationsstrecken. Daneben können Zertifikate und öffentliche Schlüssel von Zentralrechnern, insbesondere von einem Zentralrechner des Messstellenbetreibers oder eine Abrechnungszentrale hinterlegt sein. Auch hier können unterschiedliche Schlüssel und Zertifikate für unterschiedliche Operationen, beispielsweise das Signieren von Zufallszahlen, das Kodieren von Nutzerdaten und das Verschlüsseln von Kommunikationsstrecken vorgesehen sein.

Um dem Schutzprofil für Kommunikationsgeräte von Energiemengenzählern zu genügen, muss sichergestellt sein, dass eine Entnahme und missbräuchliche Verwendung des Verschlüsselungsmoduls außerhalb des ihm zugeordneten Kommunikationsgeräts erschwert, wenn nicht gar unmöglich gemacht wird. Aus diesem Grunde wird vorgeschlagen, dass das zerstörungsfrei entfernbar angeordnete Verschlüsselungsmodul in seinem initialen Zustand nur eingeschränkte Verschlüsselungsfunktionen aufweist. Diese eingeschränkten Verschlüsselungsfunktionen dienen vorzugsweise ausschließlich zur Authentifizierung des Verschlüsselungsmoduls gegenüber einem Zentralrechner und/oder umgekehrt. Dabei kann das Verschlüsselungsmodul so eingerichtet sein, dass es überprüfen kann, ob es mit einem korrekten Zentralrechner verbunden ist. Ferner kann das Verschlüsselungsmodul so eingerichtet sein, dass es sich gegenüber einem Zentralrechner identifizieren kann.

Alle weiteren Funktionen, die zu einer sichereren Kommunikation zwischen Zentralrechner und Kommunikationsgerät notwendig sind, können im initialen Zustand gesperrt sein. Insbesondere können Verschlüsselungsfunktionen zum Verschlüsseln von Nutzerdaten gesperrt sein.

Darüber hinaus kann das Verschlüsselungsmodul dazu eingerichtet sein, einen Paring Prozess mit einem Zentralrechner durchzuführen. Im Auslieferungszustand kann in dem Verschlüsselungsmodul ein öffentlicher Schlüssel eines Zentralrechners sowie ein Schlüsselpaar aus öffentlichem Schlüssel und privatem Schlüssel für das Verschlüsselungsmodul selbst gespeichert sein. Der Zentralrechner kennt darüber hinaus seinen privaten Schlüssel als auch den öffentlichen Schlüssel des Verschlüsselungsmoduls. Mit diesen Informationen ist es möglich, dass sich Verschlüsselungsmodul und Zentralrechner einander gegenüber authentifizieren und das Verschlüsselungsmodul aus seinem initialen Zustand in einen Betriebszustand wechseln kann.

Sollte ein Verschlüsselungsgeheimnis potentiell korrumpiert worden sein, verfügt das Verschlüsselungsmodul über Funktionen zum Durchführen eines Paring Prozesses, der hinlänglich bekannt ist. Bei einem solchen Paring Prozess können neue Schlüsselgeheimnisse zwischen Zentralrechner und Verschlüsselungsmodul ausgetauscht werden, indem letztmalig vorhandene Verschlüsselungsgeheimnisse verwendet werden und durch neu angelegte Verschlüsselungsgeheimnisse ersetzt werden.

Gemäß einem vorteilhaften Ausführungsbeispiel wird vorgeschlagen, dass das Verschlüsselungsmodul im Initialzustand zum Empfangen einer Aufforderung zur Erzeugung eines Zufallswerts eingerichtet ist. Dies kann eine erste Verschlüsselungsfunktion sein, die im Initialzustand ermöglicht ist. So kann das Verschlüsselungsmodul entweder von dem Zentralrechner oder von dem Kommunikationsgerät eine Aufforderung empfangen, einen Zufallswert zu erstellen. Der Zufallswert kann dabei eine Zufallszahl sein. Auch ist es möglich, dass ein Zufallswert aus einem Widerstandswert eines Widerstands innerhalb des Verschlüsselungsmoduls generiert wird. Ein Widerstandswert kann temperaturabhängig und alterungsabhängig schwanken, so dass ein abgegriffener Widerstandswert quasi stochastisch ist. Mit einem solchen Wert kann der Zufallswert generiert werden.

Insofern ist vorgeschlagen, dass das Verschlüsselungsmodul im Initialzustand zur Erzeugung des Zufallswerts in Reaktion auf eine Aufforderung zur Erzeugung eines Zufallswerts eingerichtet ist. Das Erzeugen des Zufallswerts kann somit eine weitere Funktion sein, die im Initialzustand freigeschaltet ist.

Eine weitere Verschlüsselungsfunktion, die im Initialzustand freigeschaltet sein kann, ist gemäß einem Ausführungsbeispiel das Aussenden des Zufallswertes. Dieser kann unverschlüsselt und unsigniert ausgesendet werden. Auch ist es möglich, dass in dem Initialzustand eine Signatur über den erstellten Zufallswert errechnet wird und diese Signatur zusammen mit dem Zufallswert ausgesendet wird. Hierbei wird vorzugsweise ein privater Schlüssel des Verschlüsselungsmoduls verwendet. Der Zugriff auf diesen privaten Schlüssel kann ebenfalls im Initialzustand freigegeben sein.

Gemäß einem Ausführungsbeispiel wird vorgeschlagen, dass das Verschlüsselungsmodul im Initialzustand im Anschluss an das Aussenden des Zufallswerts einen Zähler zum Überwachen der Dauer, bis eine Antwort auf das Aussenden des Zufallswerts eintrifft, aktiviert. Insofern kann ein Time-Out überwacht werden. Innerhalb einer gewissen Zeit muss eine Antwort des Zentralrechners auf den Zufallswert einlangen. Geschieht dies nicht, kann eine Manipulation vorliegen. Bei Überschreiten eines Time-Outs kann ein Fehlerzähler hochgezähltoder das Verschlüsselungsmodul gesperrt werden.

Eine Funktion, die im Verschlüsselungsmodul im Initialzustand verfügbar sein kann, ist der Zugriff auf einen öffentlichen Schlüssel des Zentralrechners. Insbesondere ist es dadurch möglich, eine Signatur des Zentralrechners zu überprüfen. Ist beispielsweise der Zufallswert mit einem privaten Schlüssel des Zentralrechners signiert worden, kann diese Signatur im Verschlüsselungsmodul bereits im Initialzustand überprüft werden.

Hierdurch ist es möglich, im Initialzustand zu überprüfen, ob das Verschlüsselungsmodul in Kommunikationsverbindung mit dem Zentralrechner steht. Gegebenenfalls kann aus dem initialen Zustand in einen Betriebszustand gewechselt werden in dem dann weitere Funktionen freigegeben werden.

Gemäß einem Ausführungsbeispiel wird vorgeschlagen, dass das Verschlüsselungsmodul im Initialzustand nach einer positiven Überprüfung der Signatur über den Zufallswert in einen Betriebszustand wechselt. Das heißt, dass insbesondere dann, wenn sichergestellt ist, dass das Verschlüsselungsmodul in Kommunikationsverbindung mit dem Zentralrechner steht, dieses in den Betriebszustand wechseln kann. Eine Verbindung mit dem Zentralrechner kann beispielsweise durch eine Überprüfung der Signatur des Zentralrechners erfolgen.

Sobald festgestellt ist, dass das Verschlüsselungsmodul in Kommunikationsverbindung mit dem richtigen Zentralrechner ist, kann in einen Betriebszustand gewechselt werden. In dem Betriebszustand ist ein Zugriff auf weitere Verschlüsselungsfunktionen möglich, die über die Verschlüsselungsfunktionen hinausgehen, die in dem Initialzustand verfügbar waren.

Stellt das Verschlüsselungsmodul bei der Überprüfung der Signatur über den Zufallswert fest, dass diese nicht von dem korrekten Zentralrechner erstellt wurde, kann das Verschlüsselungsmodul in dem Initialzustand verbleiben. Vorzugsweise wird ein Fehlerzähler hochgezählt. Beim Überschreiten des Fehlerzählers über einen Grenzwert kann davon ausgegangen werden, dass eine korrekte Verbindung mit dem Zentralrechner nicht mehr möglich ist und das Verschlüsselungsmodul kann gesperrt werden. Ein Zugriff auf den Initialzustand oder den Betriebszustand ist dann unmöglich. Vorzugsweise werden in diesem Moment alle Verschlüsselungsgeheimnisse in dem Speicher des Verschlüsselungsmoduls gelöscht.

Gemäß einem Ausführungsbeispiel wird vorgeschlagen, dass das Verschlüsselungsmodul zwei Speicherbereiche aufweist. Die Speicherbereiche haben unterschiedliche Sicherheitsstufen, die sich dadurch kennzeichnen, dass ein Speicherbereich nur im Betriebszustand erreichbar ist. Das bedeutet, dass im Initialzustand ein Zugriff auf nur den ersten Speicherbereich ermöglicht sein kann und im Betriebszustand der Zugriff auf beide Speicherbereiche. In dem zweiten Speicherbereich, der nur im Betriebszustand erreichbar ist, können alle Verschlüsselungsgeheimnisse hinterlegt sein, die für erweiterte Funktionen notwendig sind, die über die Funktionen hinausgehen, die im Initialzustand notwendig sind.

Gemäß einem Ausführungsbeispiel wird vorgeschlagen, dass in dem ersten Speicherbereich ein öffentlicher Schlüssel des Zentralrechners gespeichert ist. In dem zweiten Speicherbereich, der nur im Betriebszustand auslesbar ist, sind vorzugsweise private als auch öffentliche Schlüssel des Verschlüsselungsmoduls selbst gespeichert. Darüber hinaus können weitere öffentliche Schlüssel des Zentralrechners, die beispielsweise zum Verschlüsseln von Nutzdaten oder zum Verschlüsseln von Kommunikationskanälen genutzt werden, gespeichert sein. Außerdem können in dem zweiten Speicherbereich Zertifikate und Schlüssel vertrauenswürdiger Kommunikationspartner hinterlegt sein, die im Betriebszustand Zugriff auf das Verschlüsselungsmodul und die daran angeschlossenen Geräte haben können.

Gemäß einem Ausführungsbeispiel wird vorgeschlagen, dass das Verschlüsselungsmodul ein SIM-Modul ist. Ein SIM-Modul ist ein sogenanntes Subscriber Identity Modul. Mit diesem Subscriber Identity Modul lassen sich im Mobilfunknetz Teilnehmer eindeutig identifizieren. Das SIM-Modul verfügt über alle notwendigen Funktionalitäten, um in einem Mobilfunknetz einen Teilnehmer anzumelden und Sprach- als auch Datenverbindungen aufbauen zu können. Verschlüsselungsfunktionen, die im Mobilfunknetz notwendig sind, sind ebenfalls in dem SIM-Modul abgelegt. Darüber hinaus kann das SIM-Modul einen zusätzlichen Speicher und eine Kryptographiebereich beinhalten, in dem die Funktionalitäten des Verschlüsselungsmoduls hinterlegt sind. Somit kann das SIM-Modul in besonders einfacher Weise zum Einen zum Aufbau von Datenkommunikation zwischen dem Kommunikationsgerät und einem Weitverkehrsnetz genutzt werden und zum Anderen für die Verschlüsselungsfunktionalitäten des Verschlüsselungsmoduls.

Gerade die Verwendung eines SIM-Moduls ist besonders vorteilhaft, da dieses in besonders einfacher Weise in einen herkömmlichen, dafür vorgesehenen Einschubschacht eingeschoben werden können. Der Zugriff auf das SIM-Modul ist ebenfalls standardisiert. Somit ist der Zugriff auf das Verschlüsselungsmodul mit herkömmlichen Methoden möglich und das Verschlüsselungsmodul ist zerstörungsfrei aus dem Kommunikationsgerät entfernbar. Das Kommunikationsgerät hat vorzugsweise einen Einschubschacht für ein SIM-Modul bereits eingebaut.

Gemäß einem Ausführungsbeispiel wird vorgeschlagen, dass das Verschlüsselungsmodul nach einem spannungslosen Zustand in den Initialzustand wechselt. Somit wird sichergestellt, dass jedes Mal, wenn das Verschlüsselungsmodul spannungslos geworden ist, der Initialzustand eingenommen wird und somit ein Angriff auf ein bereits freigeschaltetes Verschlüsselungsmodul verhindert wird. Insbesondere nach dem Herausnehmen des Verschlüsselungsmoduls aus dem Kommunikationsgerät wechselt dieses in den Initialzustand und muss sich zunächst erst gegenüber dem Zentralrechner authentifizieren.

Gemäß einem Ausführungsbeispiel wird vorgeschlagen, dass das Verschlüsselungsmodul nach einer positiven Überprüfung der Signatur über den Zufallswert einen zweiten Zufallswert erstellt. Mit diesem zweiten Zufallswert ist es beispielsweise möglich, zu überprüfen, ob das Verschlüsselungsmodul tatsächlich mit dem korrekten Energiemengenzähler verbunden ist. Die Erstellung des zweiten Zufallswerts kann identisch zu der Erstellung des ersten Zufallswerts sein.

Gemäß einem Ausführungsbeispiel wird vorgeschlagen, dass der zweite Zufallswert ebenfalls ausgesendet wird. Das Erstellen des zweiten Zufallswerts und das Aussenden des zweiten Zufallswerts kann in einem erweiterten Initialzustand ermöglicht werden. Der erweiterte Initialzustand kann beispielsweise ein Zustand sein, der zwischen dem Initialzustand und dem Betriebszustand ist. Nachdem das Verschlüsselungsmodul in dem Initialzustand eine Authentifizierung mit dem Zentralrechner durchgeführt hat, wechselt es herkömmlicherweise in den Betriebszustand. Es ist jedoch auch möglich, dass ein Wechsel in den erweiterten Initialzustand geschieht, indem zunächst überprüft wird, ob das Verschlüsselungsmodul auch mit dem richtigen Energiemengenzähler verbunden ist. In diesem erweiterten initialen Zustand sind die Funktionen des Initialzustands, als auch weitere Funktionen erreichbar, die insbesondere das Erstellen eines zweiten Zufallswerts und das Überprüfen einer Signatur über den zweiten Zufallswert mit dem öffentlichen Schlüssel eines Energiemengenzählers beinhalten. Dabei ist es möglich, dass das Verschlüsselungsmodul einen Zugriff auf den öffentlichen Schlüssel eines Energiemengenzählers hat.

Aus diesen Grunde wird gemäß einem Ausführungsbeispiel vorgeschlagen, dass das Verschlüsselungsmodul vorzugsweise im Initialzustand oder im erweiterten Initialzustand ein Zugriff auf eine Überprüfung einer mit einem privaten Schlüssel des Energiemengenzählers erstellten Signatur über einen Zufallswert ermöglicht, wobei dabei insbesondere ein Zugriff auf den öffentlichen Schlüssel des Energiemengenzählers ermöglicht ist.

Gemäß einem Ausführungsbeispiel wird vorgeschlagen, dass das Verschlüsselungsmodul im Betriebszustand in Abständen eine Verbindung mit dem Zentralrechner und/oder dem Energiemengenzähler überwacht. Diese erweiterte Sicherung verhindert, dass das Verschlüsselungsmodul während es im Betriebszustand ist, ausgespäht werden kann. Sobald das Verschlüsselungsmodul feststellt, dass es nicht mehr in Kommunikationsverbindung mit dem Zentralrechner und/oder dem Energiemengenzähler steht, kann dieses in den Initialzustand zurück wechseln und ein Angriff wird erschwert. Das Überprüfen der Verbindung mit dem Energiemengenzähler kann in einer Häufigkeit erfolgen, die höher ist, als die Häufigkeit der Überprüfung der Verbindung mit dem Zentralrechner.

Gemäß einem Ausführungsbeispiel wird vorgeschlagen, dass das Verschlüsselungsmodul zumindest nach dem Wechsel von dem Initialzustand in den Betriebszustand zumindest einen Wert aus der Gruppe Positionsdaten, Identifikationsdaten des Energiemengenzählers, Logbuchdaten des Energiemengenzählers, Zählerstand des Energiemengenzählers, Logbuchdaten des Steuerrechners an den Zentralrechner übermittelt. Diese Daten können nach dem Wechsel in den Betriebszustand zunächst von dem Energiemengenzähler ausgelesen werden. Im Anschluss daran können diese Daten mit dem öffentlichen Schlüssel des Zentralrechners in dem Verschlüsselungsmodul verschlüsselt werden. Die aus dem Energiemengenzähler ausgelesene Daten können zuvor von dem Energiemengenzähler signiert worden sein. Die signierten und verschlüsselten Daten können von dem Verschlüsselungsmodul über das Kommunikationsgerät an den Zentralrechner übertragen werden. In dem Zentralrechner können die empfangenen und entschlüsselten Werte zunächst auf Echtheit überprüft werden, indem die Signatur des Energiemengenzählers überprüft wird. Anschließend können die empfangenen Werte mit in dem Zentralrechner gespeicherten Werten verglichen werden. Die zuletzt gespeicherten Werte können mit den empfangenen Werten verglichen werden und insbesondere bei den Positionsdaten und Identifikationsdaten dürfen vorzugsweise keine Veränderungen stattgefunden haben. Bei den Logbuchdaten und den Zählerständen ist eine Veränderung nur bei den jüngsten Einträgen erlaubt. Mit Hilfe des Vergleichs der von dem Verschlüsselungsmodul empfangenen Daten und den in dem Zentralrechner gespeicherten Daten ist es möglich, festzustellen, ob das Verschlüsselungsmodul tatsächlich mit dem korrekten Energiemengenzähler verbunden ist. Ferner kann überprüft werden, ob das Verschlüsselungsmodul mit dem richtigen Kommunikationsgerät verbunden ist. Abschließend kann auch überprüft werden, ob das Verschlüsselungsmodul an der korrekten Position angeordnet ist. Dadurch, dass der Energiemengenzähler seine Identifikationsdaten als auch seinen Zählerstand und Logbuchdaten signieren kann, ist eine Manipulation dieser Daten weiter erschwert.

Gemäß einem Ausführungsbeispiel wird vorgeschlagen, dass der Energiemengenzähler ein Strommesser, insbesondere ein Smart Meter ist. Insbesondere ist das Smart Meter in einer Ladestation für Elektrofahrzeuge angeordnet. Innerhalb der Ladestation ist vorzugsweise ein Ladesteuergerät angeordnet, in dem das Kommunikationsgerät angeordnet ist. Innerhalb des Kommunikationsgeräts kann ein Einschubschacht vorgesehen sein, zur Aufnahme des Verschlüsselungsmoduls. Dieses ist dabei vorzugsweise ein entfernbarer Kryptochip, der insbesondere eine SIM-Karte ist.

Ein weiterer Aspekt ist ein Verfahren zur Sicherung eines Energiemengenzählers umfassend Betreiben eines in einem Kommunikationsgerät zerstörungsfrei entfernbar angeordneten Verschlüsselungsmoduls in einem Initialzustand, Erstellen eines Zufallswertes in dem Verschlüsselungsmodul, wobei das Verschlüsselungsmodul im Initialzustand nur einen eingeschränkten Zugriff auf seine Verschlüsselungsfunktion ermöglicht.

Die zuvor genannten Verfahren können auch als Computerprogramm oder als auf einem Speichermedium gespeichertes Computerprogramm realisiert werden. Hierbei kann verschlüsselungsmodulseitig und/oder zentralrechnerseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: eine Topologie eines Energiemengenzählersicherungssystems;
- Fig. 2: einen schematischen Aufbau eines Verschlüsselungsmoduls;
- Fig. 3: ein Zustandsdiagramm eines Verschlüsselungsmoduls;
- Fig. 4: einen Nachrichtenablauf zur Authentifizierung eines Zentralrechners gegenüber dem Verschlüsselungsmodul;
- Fig. 5: einen Nachrichtenablauf zur Authentifizierung eines Energiemengenzählers gegenüber dem Verschlüsselungsmodul;
- Fig. 6: einen Nachrichtenablauf zur Bestätigung gegenüber einem Zentralrechner, dass das Verschlüsselungsmodul mit einem authentifizierten Energiemengenzähler verbunden ist.

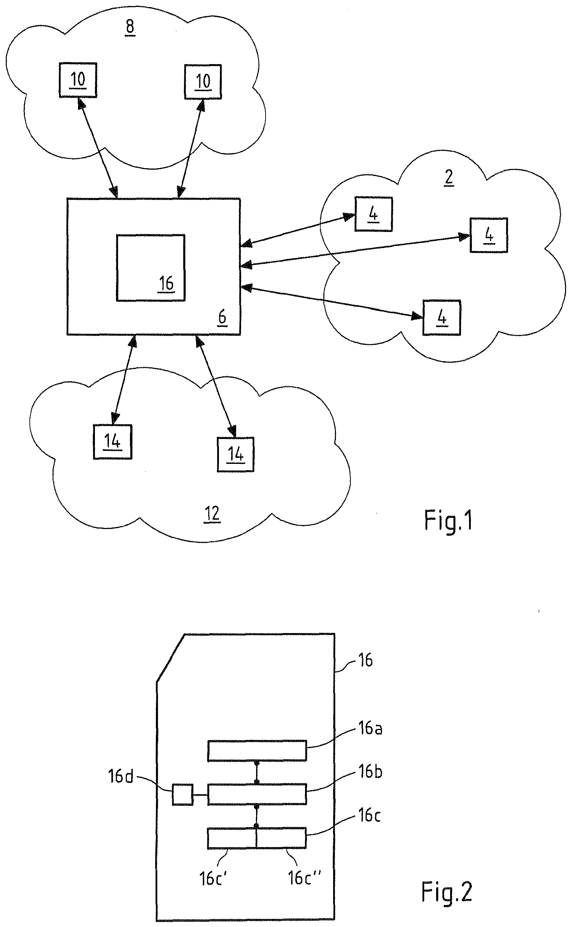

In der Fig. 1 ist ein System mit einem lokalen Messstellnetz 2 dargestellt. In dem lokalen Messstellnetz 2 sind eine Mehrzahl von Energiemengenzählern 4 angeordnet, die im gezeigten Beispiel vorzugsweise Smart Meter zum Erfassen elektrischen Stromes sind. Die Energiemengenzähler 4 sind mit einem Kommunikationsgerät 6 verbunden. Das Kommunikationsgerät 6 wird auch als Gateway verstanden, da es eine Schnittstelle zwischen dem Messstellennetz 2 und einem Weitverkehrsnetz 8 darstellt. Vorzugsweise verfügt das Kommunikationsgerät 6 über Routingfunktionalitäten und kann beispielsweise über Mobilfunk, insbesondere GSM, GPRS, UMTS, LTE oder dergleichen Funkverbindungen mit dem Weitverkehrsnetz 8 kommunizieren.

In dem Weitverkehrsnetz 8 können Zentralrechner 10 vorgesehen sein, wobei ein Zentralrechner 10 insbesondere ein Zentralrechner 10 eines Messstellenbetreibers ist. Ein Zentralrechner 10 kann jedoch auch eine Abrechnungszentrale sein. Vorzugsweise ist ein Zentralrechner 10 ein autorisierter Rechner, der für den Zugriff auf die Energiemengenzähler 4 berechtigt ist.

Ferner ist in der Fig. 1 zu erkennen, dass das Kommunikationsgerät 6 ferner eine Schnittstelle zwischen einem Heimautomatisierungsnetz 12 und dem Weitverkehrsnetz 8 zur Verfügung stellt. In dem Heimautomatisierungsnetz 12 sind vorzugsweise verschiedene lokale Einrichtungen 14, die beispielsweise Energiegewinnungseinrichtungen, Ladestationen für Elektrofahrzeuge oder dergleichen sind. Diese lokalen Einrichtungen 14 können ebenfalls über das Kommunikationsgerät 6 mit dem Weitverkehrsnetz 8 bzw. dem darin angeordneten Zentralrechner 10 kommunizieren.

Der Zugriff auf die Energiemengenzähler 4 ist sicherheitskritisch. Insofern muss sichergestellt werden, dass aus dem Weitverkehrsnetz 8 nur autorisierte Zentralrechner 10 über das Kommunikationsgerät 6 auf die Energiemengenzähler 4 bzw. die darin enthaltenen Daten zugreifen können. Ferner muss sichergestellt werden, dass das Kommunikationsgerät 6 nur mit solchen Zentralrechnern 10 nach außen kommuniziert, die berechtigt sind. Aus diesem Grunde ist das Schutzkonzept, wie Eingangs erläutert, vorgeschlagen. Dieses Schutzkonzept sieht vor, dass innerhalb des Kommunikationsgeräts 6 ein Verschlüsselungsmodul 16 angeordnet ist. Das Verschlüsselungsmodul 16 stellt die Verschlüsselungsfunktionalitäten für das Kommunikationsgerät 6 zur Verfügung.

Das Kommunikationsgerät 6 als solches kann für die Kommunikation zwischen dem Verschlüsselungsmodul 16 und dem Zentralrechner 10 transparent sein. Auch kann das Kommunikationsgerät 6 für die Kommunikation zwischen dem Verschlüsselungsmodul 16 und den jeweiligen Energiemengenzählern 4 transparent sein. Das Kommunikationsgerät 6 stellt vorzugsweise die Kommunikationsschnittstellen zur Verfügung, die zur Kommunikation zwischen dem Verschlüsselungsmodul 16 und dem Weitverkehrsnetz 8 bzw. dem Messstellennetz 2 notwendig sind.

Fig. 2 zeigt ein Verschlüsselungsmodul 16, welches vorzugsweise als Subscriber Identity Modul (SIM) ausgebildet ist und neben den für eine Mobilfunkkommunikation notwendigen Funktionalitäten über eine Schnittstelle 16a weitere, kryptographisch relevante Funktionalitäten zur Verfügung stellt. Hierzu weist das Verschlüsselungsmodul 16a einen Mikroprozessor 16b auf, der auf einen Speicher 16c mit zwei Speicherbereichen 16c' und 16c" zugreifen kann.

Schließlich ist in dem Verschlüsselungsmodul 16 ein Programmspeicher 16d vorgesehen, in dem die Programmanweisungen für den Mikroprozessor hinterlegt sind. Mit Hilfe dieser Programmanweisungen ist es möglich, das Verschlüsselungsmodul 16 entsprechend des Gegenstandes zu betreiben. Insbesondere ist es möglich, den Mikroprozessor 16b des Verschlüsselungsmoduls 16 so zu betreiben, dass in einem Initialzustand nur ein Zugriff auf eingeschränkte Funktionen möglich ist.

Insbesondere ist in dem Initialzustand nur ein Zugriff auf den Speicherbereich 16c' möglich und nicht auf den Speicherbereich 16c". In dem Speicherbereich 16c' ist vorzugsweise ein öffentlicher Schlüssel eines Zentralrechners 10 hinterlegt. Mit Hilfe dieses öffentlichen Schlüssels ist es möglich, eine von dem Zentralrechner 10 signierte Nachricht auf Authentizität zu überprüfen. Eine weitere Funktionalität, den die im Initialzustand dem Mikroprozessor 16b zur Verfügung steht, ist das Erstellen eines Zufallswertes, beispielsweise eines alphanumerischen Zufallswertes oder einer Zufallszahl. Dieser Zufallswert kann auch pseudozufällig sein, indem ein Widerstandswert, der temperaturabhängig ist, gemessen wird. Dieses temperaturabhängige Rauschen des Widerstandswerts ist pseudozufällig und somit ausreichend sicher für das beschriebene Verfahren.

In dem Speicherbereich 16c können weitere private als auch öffentliche Schlüssel von verschiedensten Marktteilnehmern als auch von dem Zentralrechner 10, den Energiemengenzählern 4 als auch dem Verschlüsselungsmodul 16 selbst hinterlegt sein.

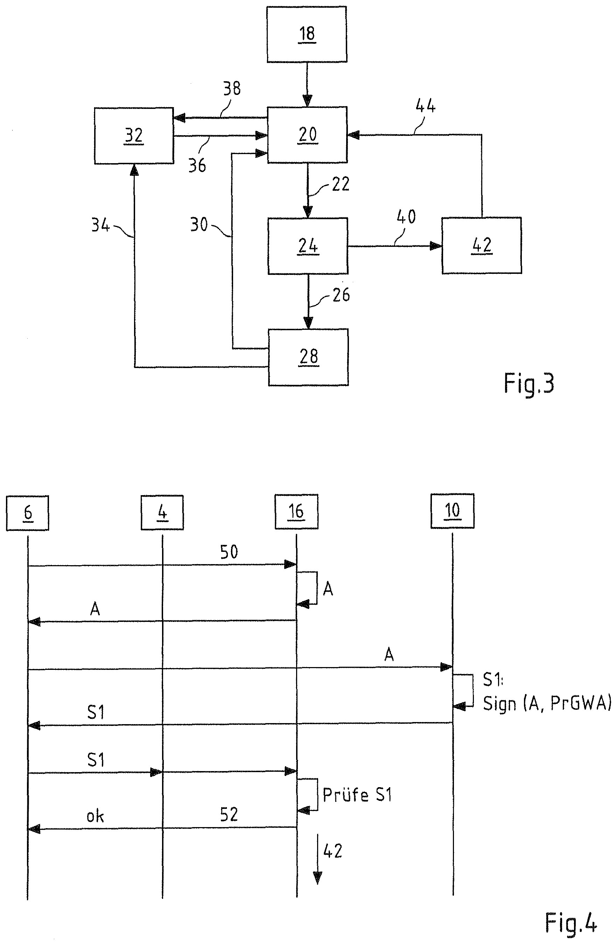

Fig. 3 zeigt ein Zustandsdiagramm eines Verschlüsselungsmoduls 16. Das Verschlüsselungsmodul 16 kann einen Ausgangszustand 18 haben. Aus dem Ausgangszustand 18 kann Verschlüsselungsmodul durch Energiezufuhr in den Initialzustand 20 wechseln.

In dem Initialzustand 20 kann das Verschlüsselungsmodul 16 beschränkt Funktionen ausführen. Hierzu gehört es, ein Kommando 22 zu Erzeugung eines Zufallswertes zu empfangen. Auf dieses Kommando 22 hin wechselt das Verschlüsselungsmodul 16 in den Wartezustand 24, in dem es zunächst den erzeugten Zufallswert aussendet und anschließend auf den Empfang eines signierten Zufallswertes von dem Zentralrechner 10 wartet. In dem Wartezustand 24 läuft ein Timer, der eine Dauer bis zum Empfang einer Signatur misst. Bei einem Ablauf 26 des Timers wechselt das Verschlüsselungsmodul 16 in den Fehlerzustand 28. Auch bei einem Empfang einer ungültigen Signatur wechselt das Verschlüsselungsmodul 16 in den Zustand 28.

Das kann bedeuten, dass in dem Wartezustand 24 nicht nur auf den Empfang des signierten Zufallswertes gewartet wird, sondern auch eine empfangene Signatur auf Gültigkeit überprüft wird. Dies kann dadurch geschehen, dass das Verschlüsselungsmodul 16 auf den in dem Speicherbereich 16c' gespeicherten öffentlichen Schlüssel des Zentralrechners 10 zugreift und anhand dieses Schlüssels als auch des in dem Verschlüsselungsmodul 16 erstellten und somit dort bekannten Zufallswertes die Signatur des Zentralrechners über den Zufallswert überprüfen kann. Ist die erzeugte Signatur fehlerhaft, so wird in den Fehlerzustand 28 gewechselt.

Sobald das Verschlüsselungsmodul 16 in den Fehlerzustand 28 gewechselt ist, läuft zunächst ein weiterer Timer, der eine Totzeit des Verschlüsselungsmoduls 16 bedingt. Innerhalb dieser Zeit ist das Verschlüsselungsmodul funktionslos. Die Dauer des Timers kann abhängig von der Anzahl der Fehlversuche sein, dass heißt abhängig davon, wie oft das Verschlüsselungsmodul in den Fehlerzustand 28 gewechselt ist. Die Dauer kann exponentiell wachsen, so dass mit jedem Fehlversuch die Sperrzeit um einen Faktor anwächst. Erst nach Ablauf der Sperrzeit wechselt (30) das Verschlüsselungsmodul 16 wieder in den Initialzustand 20.

Ferner kann ein Fehlerzähler hochgezählt werden und wenn der Fehlerzähler in dem Fehlerzustand einen Grenzwert überschreitet, kann das Verschlüsselungsmodul 16 in einen Resetmodus 32 wechseln (34).

In dem Resetmodus 32 können neue Schlüsselpaare mit dem Zentralrechner 10 ausgetauscht werden. Auch ist es möglich, dass alle in dem Verschlüsselungsmodul 16 bzw. in den Speichern 16c' und 16c" gespeicherten Schlüssel und/oder Zertifikate gespeichert werden. Auch kann ein an sich bekannter Paring-Prozess mit dem Zentralrechner 10 angestoßen werden, in welchem unter letztmaliger Verwendung bestehender Schlüssel neue Schlüsselpaare und Zertifikate ausgetauscht werden. Nachdem ein Paring erfolgt ist, kann beispielsweise ein Wechsel (36) in den Initialzustand 32 erfolgen.

In dem Initialzustand 20 ist das Verschlüsselungsmodul 16 weiterhin in der Lage, einen externen Befehl zum Erzeugen neuer Schlüssel zu empfangen, woraufhin es ebenfalls in den Reset-Modus 32 wechselt (38).

In dem Wartezustand 24 kann, wie bereits erwähnt, das Verschlüsselungsmodul 16 unter Verwendung des in dem Speicher 16c gespeicherten öffentlichen Schlüssels des Zentralrechners 10 eine Überprüfung einer Signatur über den Zufallswert durchführen. Stellt sich bei dieser Überprüfung heraus, dass der richtige Zentralrechner 10 den von dem Verschlüsselungsmodul 16 erstellten Zufallswert signiert hat, wechselt (40) das Verschlüsselungsmodul 16 in einen Betriebszustand 42. In dem Betriebszustand 42 werden unter Anderem der Zugriff auf den Speicherbereich 16c" freigegeben als auch verschiedenste Funktionalitäten des Mikroprozessors 16b aktiviert. Unter Anderem sind diese Funktionalitäten das Verschlüsseln und Signieren von Informationen, insbesondere das Verschlüsseln und Signieren von Messgerätezählerständen der Energiemengenzähler 4. Ferner ist eine Funktionalität das Überprüfen von Signaturen der Energiemengenzähler 4, um zu überwachen, dass das Verschlüsselungsmodul 16 weiterhin mit den korrekten Energiemengenzählern 4 verbunden ist.

Während des Betriebszustands 42 wird in Abständen, vorzugsweise in regelmäßigen Abständen, vorzugsweise in gleichbleibenden Abständen überprüft, ob das Verschlüsselungsmodul 16 in Kommunikationsverbindung mit dem Zentralrechner 10 ist. Dies kann unter Austausch von Zufallswerten und Signaturen erfolgen, um sicherzustellen, dass auch der richtige Zentralrechner 10 als Kommunikationspartner zur Verfügung steht.

Vorzugsweise in kürzeren Abständen kann überprüft werden, ob das Verschlüsselungsmodul 16 mit dem Kommunikationsgerät 6 verbunden ist. Auch dies kann unter Austausch von Signaturen und Schlüsseln erfolgen.

Während des Betriebszustands 42 gewährleistet das Verschlüsselungsmodul 16 den gesicherten und authentifizierten Austausch von Informationen zwischen dem Zentralrechner 10 und den Energiemengenzählern 4 über das Kommunikationsgerät 6. Somit stellt das Verschlüsselungsmodul 16 die Möglichkeit zur Verfügung, abrechnungsrelevante Daten zwischen dem Energiemengenzähler 4 und dem Zentralrechner 10 auszutauschen.

Stellt das Kommunikationsmodul 16 in dem Bebtriebszustand 42 fest, dass es nicht mehr in Kommunikationsverbindung mit dem Zentralrechner 10 oder einem bestimmten Energiemengenzähler 4 oder dem Kommunikationsgerät 6 ist, kann es in den Initialzustand 20 wechseln (44). Somit ist sichergestellt, dass während des Betriebszustands 42 stets das Verschlüsselungsmodul 16 in der ihm bekannten Umgebung angeordnet ist und bei einem Fehler in der Umgebung oder dem Entfernen des Verschlüsselungsmodul 16 aus der Umgebung dieses in den Initialzustand 20 wechselt und der Zugriff auf weitere Funktionalitäten nicht mehr möglich ist. Dies verhindert zuverlässig eine Manipulation der von den Energiemengenzählern 4 übertragenen abrechnungsrelevanten Daten, da diese nur dann von dem Verschlüsselungsmodul 16 korrekt bearbeitet werden können, wenn dieses gesichert in der ihm bekannten Umgebung verbleibt.

Fig. 4 zeigt den Ablauf eines Freischaltprozesses, wie er beim Wechsel des Verschlüsselungsmoduls 16 aus dem Initialzustand 20 in den Betriebszustand 42 erfolgt. Hierbei ist schematisch der Ablauf von Nachrichten zwischen dem Kommunikationsgerät 6, dem Energiemengenzähler 4, dem Verschlüsselungsmodul 16 und dem Zentralrechner 10 dargestellt.

In dem Initialzustand 20 kann das Verschlüsselungsmodul 16 von dem Steuergerät 6 eine Aufforderung 50 zur Erstellung eines Zufallswertes empfangen. Hieraufhin erstellt das Verschlüsselungsmodul 16 in dem Initialzustand 20 den Zufallswert A, der vorzugsweise ein alphanumerischer Zufallswert ist. Dieser Zufallswert A kann auch ein binärer Wert sein.

Im Anschluss daran übersendet das Verschlüsselungsmodul 16 den erzeugten Zufallswert A an das Kommunikationsgerät 6.

Das Kommunikationsgerät 6 leitet den Zufallswert A transparent durch an den Zentralrechner 10.

In dem Zentralrechner 10 wird eine Signatur S1 über den Zufallswert A mit den privaten Schlüssel PrGWA des Zentralrechners 10 erstellt. Diese Signatur S1 wird von dem zentralen Rechner 10 zurück an das Kommunikationsgerät 6 übermittelt.

Das Kommunikationsgerät 6 leitet die Signatur S1 transparent weiter an das Verschlüsselungsmodul 16, welches sich nunmehr in dem Wartezustand 24 befindet.

In dem Wartenzustand 24 empfängt das Verschlüsselungsmodul 16 die Signatur S1 und greift auf den öffentlichen Schlüssel PubGWA des Zentralrechners 10, der in dem Speicherbereich 16c' gespeichert ist, zu. Mit Hilfe des öffentlichen Schlüssels PubGWA erfolgt eine Überprüfung der Signatur S1 zusammen mit dem in dem Verschlüsselungsmodul 16 bekannten Zufallswert A. Bei einer korrekten Überprüfung wechselt das Verschlüsselungsmodul 16 in den Betriebszustand 42 und meldet (52) dies an das Kommunikationsgerät 6. Im Fehlerfall würde das Verschlüsselungsmodul 16 in den Fehlerzustand 28 wechseln.

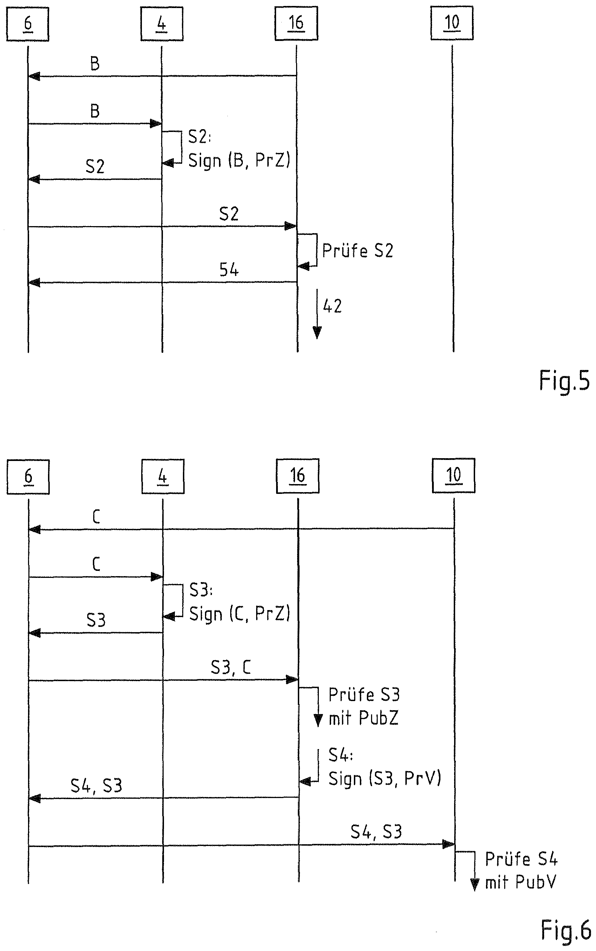

Fig. 5 zeigt einen Ablauf einer weiteren Sicherung des Verschlüsselungsmoduls 16, bevor es in den Betriebszustand 42 wechselt.

Es ist beispielsweise möglich, dass nach einem positiven Überprüfen der Signatur S1 und der Meldung (52) an das Kommunikationsgerät 6, das Verschlüsselungsmodul 16 nicht unmittelbar in dem Betriebszustand 42 wechselt, sondern einen Zwischenzustand einnimmt. In diesem Zwischenzustand übermittelt das Verschlüsselungsmodul 16 einen weiteren Zufallswert B an das Kommunikationsgerät 6. Das Kommunikationsgerät 6 übermittelt diesen Zufallswert B transparent an den Energiemengenzähler 4.

In dem Energiemengenzähler 4 wird über den Zufallswert B mit einem privaten Schlüssel PrZ eine Signatur S2 errechnet. Die Signatur S2 wird von dem Zähler 4 über das Kommunikationsgerät 6 an das Verschlüsselungsmodul 16 übertragen. In dem Verschlüsselungsmodul 16 wird in dem Zwischenzustand ein Zugriff auf einen öffentlichen Schlüssel PubZ des Energiemengenzählers 4 freigegeben. Mit Hilfe dieses Schlüssels ist eine Überprüfung der Signatur S2 über den Zufallswert B möglich. Bei einer positiven Überprüfung wird dies an das Kommunikationsgerät 6 gemeldet (54) und das Verschlüsselungsmodul 16 wechselt in den Betriebszustand 42.

Fig. 6 zeigt einen weiteren Ablauf eines Verfahrens, bei dem der Zentralrechner 10 überprüfen kann, ob das Verschlüsselungsmodul 16 in Kommunikationsreichweite ist.

Hierzu übermittelt der Zentralrechner 10 einen Zufallswert C transparent über das Steuergerät 6 an einen Energiemengenzähler 4. In dem Energiemengenzähler 4 wird eine Signatur S3 über den Zufallswert C mit dem privaten Schlüssel PrZ des Energiemengenzählers 4 erstellt.

Die Signatur S3 wird transparent über das Kommunikationsgerät 6 zunächst an das Verschlüsselungsmodul 16 übermittelt. In dem Verschlüsselungsmodul 16 erfolgt zunächst eine Überprüfung der Signatur S3. Hierzu hat das Verschlüsselungsmodul 16 von dem Steuergerät 6 ebenfalls den Zufallswert C empfangen (nicht dargestellt). Ist die Signatur S3 korrekt, was mit Hilfe des öffentlichen Schlüssels PubZ des Energiemengenzählers 4 erfolgt, erstellt das Verschlüsselungsmodul 16 eine Signatur S4 über die Signatur S3 mit seinem privaten Schlüssel PrV.

Die Signatur S4 als auch die Signatur S3 wird anschließend transparent über das Kommunikationsgerät 6 an den Zentralrechner 10 übermittelt. In dem Zentralrechner 10 kann die Signatur S4 über die Signatur S3 unter Verwendung des öffentlichen Schlüssels PubV des Verschlüsselungsmoduls 16 überprüft werden. Im Falle einer positiven Überprüfung ist in dem Zentralrechner 10 sichergestellt, dass zum Einen das Kommunikationsmodul 16 über das Steuergerät 6 mit dem Zentralrechner 10 kommunizieren kann. Ferner ist sichergestellt, dass der Verschlüsselungsmodul 16 mit dem korrekten Energiemengenzähler 4 verbunden ist, da ansonsten das Verschlüsselungsmodul 16 die Signatur S4 nicht erstellt hätte. Dies stellt sicher, dass das Verschlüsselungsmodul 16 in der korrekten Umgebung insbesondere mit dem korrekten Energiemengenzähler 4 verbunden ist und dessen Informationen und abrechnungsrelevanten Daten für eine Kommunikation mit dem Zentralrechner 10 verschlüsseln und signieren kann.

Mit Hilfe des gezeigten Verschlüsselungsmoduls ist es möglich, ein Schutzprofil für Smart-Meter Gateways zu erfüllen, ohne dass das Verschlüsselungsmodul fest in dem Kommunikationsgerät 6 verankert sein muss. Vielmehr ist es möglich, ein zerstörungsfrei entfernbares Verschlüsselungsmodul 16 in dem Kommunikationsgerät 6 vorzusehen, welches durch die gezeigten Verfahren gegenüber Missbrauch gesichert ist.

## Patentansprüche

1. Energiemengenzählersicherungssystem mit
- einem mit einem Energiemengenzähler (4) verbindbaren Kommunikationsgerät (6),
- einem in dem Kommunikationsgerät (6) zerstörungsfrei entfernbar angeordneten Verschlüsselungsmodul (16),
- wobei das Verschlüsselungsmodul (16) im Initialzustand (20) einen eingeschränkten Zugriff auf seine Funktionen ermöglicht, und
- das Verschlüsselungsmodul (16) im Initialzustand (20) zum Aussenden eines Zufallswertes eingerichtet ist,
**dadurch gekennzeichnet,**
- **dass** das Verschlüsselungsmodul (16) im Initialzustand (20) einen Zugriff auf eine Überprüfung einer mit einem privaten Schlüssel eines zentralen, von dem Kommunikationsgerät (6) räumlich entfernten Zentralrechners erstellten Signatur über den Zufallswert ermöglicht, und
- **dass** das Verschlüsselungsmodul (16) im Initialzustand (20) nach einer positiven Überprüfung der Signatur über den Zufallswert in einen Betriebszustand (42) wechselt, in dem es einen Zugriff auf weitere Verschlüsselungsfunktionen ermöglicht.

2. Energiemengenzählersicherungssystem nach Anspruch 1, **dadurch gekennzeichnet, dass** das Verschlüsselungsmodul (16) im Initialzustand (20) zum Empfangen einer Aufforderung zur Erzeugung eines Zufallswertes eingerichtet ist und/oder dass das Verschlüsselungsmodul (16) im Initialzustand (20) zur Erzeugung des Zufallswertes in Reaktion auf eine Aufforderung zur Erzeugung des Zufallswertes eingerichtet ist.

3. Energiemengenzählersicherungssystem nach Anspruch 1 oder 2, **dadurch gekennzeichnet, dass** und/oder dass das Verschlüsselungsmodul (16) im Initialzustand (20) zum Aussenden einer mit einem privaten Schlüssel des Verschlüsselungsmoduls (16) erstellten Signatur über den Zufallswert eingerichtet ist, und/oder dass das Verschlüsselungsmodul (16) im Initialzustand (20) im Anschluss an das Aussenden des Zufallswertes einen Zähler zum Überwachen der Dauer, bis eine Antwort auf das Aussenden des Zufallswertes eintrifft, aktiviert.

4. Energiemengenzählersicherungssystem nach einem der vorangehenden Ansprüche, **dadurch gekennzeichnet, dass** das Verschlüsselungsmodul (16) im Initialzustand (20) einen Zugriff auf eine Überprüfung einer mit einem privaten Schlüssel eines zentralen, von dem Kommunikationsgerät (6) räumlich entfernten Zentralrechners erstellten Signatur über den Zufallswertes ermöglicht, wobei ein Zugriff auf einen öffentlichen Schlüssel des Zentralrechners ermöglicht ist, und/oder dass das Verschlüsselungsmodul (16) im Initialzustand (20) nach einer negativen Überprüfung der Signatur über den Zufallswertes im Initialzustand (20) verbleibt und einen Fehlerzälher hochzählt.

5. Energiemengenzählersicherungssystem nach einem der vorangehenden Ansprüche, **dadurch gekennzeichnet, dass** das Verschlüsselungsmodul (16) zwei Speicherbereiche aufweist, wobei im Initialzustand (20) ein Zugriff nur auf den ersten Speicherbereich ermöglicht ist und im Betriebszustand (42) ein Zugriff auf den ersten und zweiten Speicherbereich ermöglicht ist, und/oder dass in dem ersten Speicherbereich ein öffentlicher Schlüssel des Zentralrechners gespeichert ist.

6. Energiemengenzählersicherungssystem nach Anspruch 4, **dadurch gekennzeichnet, dass** das Verschlüsselungsmodul (16) im Initialzustand (20) bei einem Überschreiten eines Grenzwertes durch den Fehlerzähler seine Speicherbereiche löscht.

7. Energiemengenzählersicherungssystem nach einem der vorangehenden Ansprüche, **dadurch gekennzeichnet, dass** das Verschlüsselungsmodul (16) ein SIM-Modul ist.

8. Energiemengenzählersicherungssystem nach einem der vorangehenden Ansprüche, **dadurch gekennzeichnet, dass** das Verschlüsselungsmodul (16) nach einem spannungslosen Zustand in den Initialzustand (20) wechselt.

9. Energiemengenzählersicherungssystem nach einem der vorangehenden Ansprüche, **dadurch gekennzeichnet, dass** das Verschlüsselungsmodul (16) nach einer positiven Überprüfung der Signatur über den Zufallswert einen zweiten Zufallswert erstellt.

10. Energiemengenzählersicherungssystem nach einem der vorangehenden Ansprüche, **dadurch gekennzeichnet, dass** das Verschlüsselungsmodul (16) den zweiten Zufallswert aussendet

11. Energiemengenzählersicherungssystem nach Anspruch 10, **dadurch gekennzeichnet, dass** das Verschlüsselungsmodul (16) im Initialzustand (20) einen Zugriff auf eine Überprüfung einer mit einem privaten Schlüssel des Energiemengenzählers (4) erstellten Signatur über den zweiten Zufallswert ermöglicht, wobei dabei ein Zugriff auf einen öffentlichen Schlüssel des Energiemengenzählers (4) ermöglicht ist.

12. Energiemengenzählersicherungssystem nach einem der vorangehenden Ansprüche, **dadurch gekennzeichnet, dass** das Verschlüsselungsmodul (16) im Betriebszustand (42) in Abständen eine Verbindung mit dem Zentralrechner und/oder dem Energiemengenzähler (4) überwacht.

13. Energiemengenzählersicherungssystem nach einem der vorangehenden Ansprüche, **dadurch gekennzeichnet, dass** das Verschlüsselungsmodul (16) zumindest nach dem Wechsel von dem Initialzustand (20) in den Betriebszustand (42) zumindest einen Wert aus der Gruppe:
- Positionsdaten,
- Identifikationsdaten des Energiemengenzählers (4),
- Logbuchdaten des Energiemengenzählers (4),
- Zählerstand des Energiemengenzählers (4),
- Logbuchdaten des Kommunikationsgerätes (6), an den Zentralrechner übermittelt.

14. Energiemengenzählersicherungssystem nach einem der vorangehenden Ansprüche, **dadurch gekennzeichnet, dass** der Energiemengenzähler (4) ein Strommesser, insbesondere ein Smart-Meter ist.

15. Verfahren zur Sicherung eines Energiemengenzählers (4) umfassend:
- Betreiben eines in einem Kommunikationsgerät (6) zerstörungsfrei entfernbar angeordneten Verschlüsselungsmoduls (16) in einem Initialzustand (20),
- Erstellen eines Zufallswertes in dem Verschlüsselungsmodul (16),
- wobei das Verschlüsselungsmodul (16) im Initialzustand (20) nur einen eingeschränkten Zugriff auf seine Verschlüsselungsfunktionen ermöglicht,
**dadurch gekennzeichnet,**
- **dass** in dem Verschlüsselungsmodul (16) im Initialzustand (20) ein Zugriff auf eine Überprüfung einer mit einem privaten Schlüssel eines zentralen, von dem Kommunikationsgerät (6) räumlich entfernten Zentralrechners erstellten Signatur über den Zufallswertes ermöglicht wird, und
- **dass** das Verschlüsselungsmodul (16) im Initialzustand (20) nach einer positiven Überprüfung der Signatur über den Zufallswertes in einen Betriebszustand (42) wechselt, in dem einen Zugriff auf weitere Verschlüsselungsfunktionen ermöglicht wird.

## Claims

1. Energy meter security system with
- a communication device (6) which can be connected to an energy meter (4),
- an encryption module (16) which is arranged within the communication device (6) such that it can be removed non-destructively, wherein
- the encryption module (16) enabling restricted access to its functions in its initial state (20), and
- the encryption module (16) arranged to transmit a random value in its initial state (20),
**characterized in that**
- the encryption module (16) enables, in its initial state (20), access to a verification of a signature via the random value created with a private key of a central computer remote from the communication device (6), and
- the encryption module (16), in its initial state (20), changes, after a positive check of the signature via the random value, into an operating state (42) in which it enables access to further encryption functions.

2. Energy meter security system according to claim 1, **characterized in that** the encryption module (16) is arranged to receive a request to generate a random value in its initial state (20) and/or **in that** the encryption module (16) is arranged to generate the random value in response to a request to generate the random value in its initial state (20).

3. Energy meter security system according to claim 1 or 2, **characterized in that** the encryption module (16) is arranged to transmit a signature which has been generated with a private key of the encryption module (16) via the random value, in its initial state (20) and/or **in that** the encryption module (16) in its initial state (20) activates a counter following the transmission of the random value for monitoring the duration until a response to the transmission of the random value arrives.

4. Energy meter security system according to one of the preceding claims, **characterized in that,** the encryption module (16) enables, in its initial state (20), access to a verification of a signature via the random value created with a private key of a central computer remote from the communication device (6), wherein access to a public key of the central computer being possible, and/or **in that**, in its initial state (20), the encryption module (16), after a negative check of the random value signature, remains in its initial state (20) and counts up an error counter.

5. Energy meter security system according to one of the preceding claims, **characterized in that** the encryption module (16) has two memory areas, wherein access to only the first memory area is possible in its initial state (20) and access to the first and second memory areas is possible in the operating state (42), and/or **in that** a public key of the central computer is stored in the first memory area.

6. Energy meter security system according to claim 4, **characterized in that** the encryption module (16) deletes its memory areas in its initial state (20) when a limit value is exceeded by the error counter.

7. Energy meter security system according to one of the preceding claims, **characterized in that** the encryption module (16) is a SIM module.

8. Energy meter security system according to one of the preceding claims, **characterized in that** the encryption module (16) changes to its initial state (20) after a de-energized state.

9. Energy meter security system according to one of the preceding claims, **characterized in that** the encryption module (16) generates a second random value after a positive check of the signature via the random value.

10. Energy meter security system according to one of the preceding claims, **characterized in that** the encryption module (16) transmits the second random value.

11. Energy meter security system according to claim 10, **characterized in that,** in its initial state (20), the encryption module (16) enables access to a verification of a signature created with a private key of the energy meter (4) via the second random value, wherein access to a public key of the energy meter (4) is enabled.

12. Energy meter security system according to one of the preceding claims, **characterized in that,** in the operating state (42), the encryption module (16) monitors a connection with the central computer and/or the energy meter (4) at intervals.

13. Energy meter security system according to one of the preceding claims, **characterized in that** the encryption module (16), at least after the change from the initial state (20) to the operating state (42), transmits at least one value from the group:
- Position data,
- Identification data of the energy meter (4),
- Logbook data of the energy meter (4),
- Meter reading of the energy meter (4),
- Logbook data of the communication device (6), to the central computer.

14. Energy meter security system according to one of the preceding claims, **characterized in that** the energy meter (4) is an ampermeter, in particular a smart meter.

15. Method for securing an energy meter (4) comprising:
- operating an encryption module (16), which is arranged within the communication device (6) such that it can be removed non-destructively, in an initial state (20),
- generating a random value in the encryption module (16),
- wherein the encryption module (16) enables restricted access to its functions in its initial state (20),
**characterized in that**
- the encryption module (16) enables, in its initial state (20), access to a verification of a signature via the random value created with a private key of a central computer remote from the communication device (6), and
- the encryption module (16), in its initial state (20), changes after a positive check of the signature via the random value, into an operating state (42) in which access to further encryption functions is enabled.

## Revendications

1. Système de sécurité d'un compteur de quantité d'énergie, avec
- un appareil de communication (6), qui peut être relié à un compteur de quantité d'énergie (4),
- un module de codage (16), qui est disposé dans l'appareil de communication (6) en pouvant en être retiré sans détérioration,
- sachant que le module de codage (16) à l'état initial (20) permet un accès limité à ses fonctions, et
- que le module de codage (16) à l'état initial (20) est aménagé pour l'émission d'une valeur aléatoire,
**caractérisé en ce que**
- le module de codage (16) à l'état initial (20) permet un accès à la vérification d'une signature par l'intermédiaire de la valeur aléatoire établie avec une clé privée d'un ordinateur central éloigné localement de l'appareil de communication (6), et
- que le module de codage (16), après une vérification positive de la signature par l'intermédiaire de la valeur aléatoire, passe de l'état initial (20) à un état de fonctionnement (42) dans lequel il permet un accès à d'autres fonctions de codage.

2. Système de sécurité d'un compteur de quantité d'énergie selon la revendication 1, **caractérisé en ce que** le module de codage (16) à l'état initial (20) est aménagé pour recevoir une demande de génération d'une valeur aléatoire et / ou que le module de codage (16) à l'état initial (20) est aménagé pour la génération de la valeur aléatoire en réaction à une demande de génération de la valeur aléatoire.

3. Système de sécurité d'un compteur de quantité d'énergie selon revendication 1 ou 2, **caractérisé en ce que**
- le module de codage (16) à l'état initial (20) est aménagé pour émettre une signature par l'intermédiaire d'une valeur aléatoire établie avec une clé privée du module de codage (16), et / ou que le module de codage (16) à l'état initial (20) est activé, à la suite de l'émission de la valeur aléatoire, pour contrôler la durée du temps écoulé jusqu'à l'arrivé d'une réponse à l'émission de la valeur aléatoire.

4. Système de sécurité d'un compteur de quantité d'énergie selon l'une des revendications précédentes, **caractérisé en ce que**
- le module de codage (16) à l'état initial (20) permet un accès à une vérification d'une signature par l'intermédiaire de la valeur aléatoire établie avec une clé privée d'un ordinateur central éloigné localement de l'appareil de communication (6), sachant qu'un accès à une clé publique de l'ordinateur central à l'état initial (20) est permise, et / ou que le module de codage (16) à l'état initial (20) demeure à l'état initial (20) après une vérification négative de la signature concernant la valeur aléatoire et incrémente un compteur d'erreurs.

5. Système de sécurité d'un compteur de quantité d'énergie selon l'une des revendications précédentes, **caractérisé en ce que** le module de codage (16) est doté de deux domaines de mémoire, sachant que, à l'état initial (20), il n'est possible d'accéder qu'au premier domaine de mémoire, et qu'à l'état de fonctionnement (42) il est possible d'accéder au premier et au deuxième domaine de mémoire, et / ou qu'une clé publique de l'ordinateur central est mémorisée dans le premier domaine de mémoire.

6. Système de sécurité d'un compteur de quantité d'énergie selon la revendication 4,
**caractérisé en ce que** le module de codage (16) à l'état initial (20) efface ses domaines de mémoire quand une valeur limite est surpassée par le compteur d'erreurs.

7. Système de sécurité d'un compteur de quantité d'énergie selon l'une des revendications précédentes, **caractérisé en ce que** le module de codage (16) est un module SIM.

8. Système de sécurité d'un compteur de quantité d'énergie selon l'une des revendications précédentes, **caractérisé en ce que** le module de codage (16) passe à l'état initial (20) après un état sans tension.

9. Système de sécurité d'un compteur de quantité d'énergie selon l'une des revendications précédentes, **caractérisé en ce que** le module de codage (16) établit une deuxième valeur aléatoire après une vérification positive de la signature.

10. Système de sécurité d'un compteur de quantité d'énergie selon l'une des revendications précédentes, **caractérisé en ce que** le module de codage (16) envoie la deuxième valeur aléatoire.

11. Système de sécurité d'un compteur de quantité d'énergie selon la revendication 10,
**caractérisé en ce que** le module de codage (16) à l'état initial (20) permet un accès à une vérification d'une signature établie avec une clé privée du compteur de quantité d'énergie (4) par l'intermédiaire de la deuxième valeur aléatoire, sachant que, ce faisant, un accès à un clé publique du compteur de quantité d'énergie (4) est permise.

12. Système de sécurité d'un compteur de quantité d'énergie selon l'une des revendications précédentes, **caractérisé en ce que** le module de codage (16) à l'état de fonctionnement (42) surveille à intervalles une liaison avec l'ordinateur central et / ou avec le compteur de quantité d'énergie (4).

13. Système de sécurité d'un compteur de quantité d'énergie selon l'une des revendications précédentes, **caractérisé en ce que** le module de codage (16) transmet à l'ordinateur central, au moins après le passage de l'état initial (20) à l'état de service (42), au moins une valeur en provenance du groupe:
- données de position,
- donnés d'identification du compteur de quantité d'énergie (4),
- données du journal de bord du compteur de quantité d'énergie (4),
- état du compteur de quantité d'énergie (4),
- données du journal de bord de l'appareil de communication (6).

14. Système de sécurité d'un compteur de quantité d'énergie selon l'une des revendications précédentes, **caractérisé en ce que** le compteur de quantité d'énergie (4) est un compteur de courant, en particulier un compteur intelligent.

15. Procédé de sécurisation d'un compteur de quantité d'énergie (4), comprenant :
- fonctionnement dans un état initial (20) d'un module de codage (16) qui est disposé dans l'appareil de communication (6) en pouvant en être retiré sans détérioration,
- établissement d'une valeur aléatoire dans le module de codage (16),
- sachant que le module de codage (16) à l'état initial (20) ne permet qu'un accès limité à ses fonctions de codage,
**caractérisé en ce que**
- le module de codage (16) à l'état initial (20) permet un accès à une vérification d'une signature, établie avec une clé privée d'un ordinateur central éloigné localement de l'appareil de communication (6), par l'intermédiaire de la valeur aléatoire, et que
- le module de codage (16), après une vérification positive de la signature par l'intermédiaire de la valeur aléatoire, passe de l'état initial (20) à un état de fonctionnement (42) dans lequel il permet un accès à d'autres fonctions de codage.
